# EUROPEAN PATENT APPLICATION

(11) **EP 3 190 506 A1**
(43) Date of publication of application: **12.07.2017**
(21) Application number: 15838929.6
(22) Date of filing: 19.03.2015
(51) Int. Cl.: G06F 3/0488

(54) **INTERFACE DISPLAY METHOD AND DEVICE**

(30) Priority: 03.09.2014 CN 201410446829
(71) Applicant: ZTE Corporation, Shenzhen, Guangdong 518057 (CN)
(72) Inventor: XUE, Tao, Shenzhen Guangdong 518057 (CN)
(74) Representative: Carangelo, Pierluigi
(86) International application number: PCT/CN2015/074637
(87) International publication number: WO 2016/033957

(57) **Abstract**

An interface display method and apparatus are provided. The method includes the following steps. A motion trail of a continuous touch on a touch control screen is received. The touch control screen is divided into multiple display areas or multiple layers of display areas according to the motion trail. At least one application program interface and/or at least one application list interface are/is displayed via the multiple display areas or the multiple layers of display areas. The technical solution solves the problem of complicated operation for split-screen displaying in the related art, thereby improving the user experience.

## Description

### Technical Field

The present disclosure relates to the field of communications, and in particular to an interface display method and apparatus.

### Background

In a process of using a terminal device in the related art, it is usually required to process multiple tasks simultaneously. However, a terminal device has only one screen generally. When the screen of the terminal device is occupied to display one application task, another application can only be processed on the background, and a user cannot know an interface change during background processing of the application, which leads to bad user experience of using the application. Therefore, on an operating system of a terminal device supporting multiple tasks such as an Android system, each manufacturer starts supporting a multi-window switching mode to improve the user experience. However, this mode is still not user friendly enough, and the user cannot know real-time states and change of application interfaces of multiple applications in real time. Particularly, the user has to switch applications by means of a task manager under the following scenarios: simultaneously using of Weibo and WeChat, and using of instant messaging software and online shopping. Thus, functions of the multi-task operating system cannot be fully embodied.

Some manufacturer proposes a split-screen solving method. That is, a part of the screen is used for displaying and processing an application A, while the other part of the screen is used for displaying and processing an application B. Specially, on some large-screen Android devices, screens may be divided into four or even more screen areas to display and process different applications. This solves the problem that multiple applications cannot be displayed at the same time.

However, the method for splitting a screen for split-screen displaying adopted in the related art is only a common screen splitting way. The screen splitting operation supported in the related art is a process of starting an application menu on a split-screen application icon, clicking a single application and dragging the application to a part of the screen for displaying; or a process of clicking an application combination, and automatically creating a split screen according to the application combination. The above-mentioned operation process is a process based on a machine operation. That is, a user has to adapt his/her operations to a machine-based screen-splitting mode, and therefore needs to learn the operation process. Moreover, when there are a lot of applications, the user operation will be quite inconvenient. In addition, the screen-splitting process of each application is stiff, and each split screen area cannot be adjusted according to the intention of the user. Besides, the adjustment process needs to follow a machine specified mode and is quite complicated.

An effective solution has not been proposed yet currently for the problem of complicated operation for split-screen displaying in the related art.

### Summary

Embodiments of the present disclosure provide an interface display method and apparatus, which are intended to at least solve the problem of complicated operation for split-screen displaying in the related art.

According to an aspect of the embodiments of the present disclosure, an interface display method is provided, which may include that: a motion trail of a continuous touch on a touch control screen is received; the touch control screen is divided into multiple display areas or multiple layers of display areas according to the motion trail; and at least one application program interface and/or at least one application list interface are/is displayed via the multiple display areas or the multiple layers of display areas.

In an exemplary embodiment, the step that the touch control screen is divided into multiple display areas or multiple layers of display areas according to the motion trail may include that: a display area division mode corresponding to the motion trail is determined according to the motion trail, wherein the division mode includes at least one of the following: quantity of display areas, size of display areas, and a layering or partitioning display mode; and the touch control screen is divided into multiple display areas or multiple layers of display areas according to the display area division mode.

In an exemplary embodiment, the method may further include that: motion trail configuration information is received; and a corresponding relation between the motion trail and the display area division mode is configured according to the motion trail configuration information.

In an exemplary embodiment, the motion trail may include: a splitting gesture; or a splitting gesture and a starting gesture following the splitting gesture, wherein the step that the touch control screen is divided into multiple display areas or multiple layers of display areas according to the motion trail may include that: the touch control screen is divided into multiple display areas or multiple layers of display areas according to the splitting gesture; and the step that at least one application program interface and/or at least one application list interface are/is displayed via the multiple display areas or the multiple layers of display areas may include that: at least one application program interface and/or at least one application list interface are/is displayed via the multiple display areas or the multiple layers of display areas under a condition that the starting gesture is detected.

In an exemplary embodiment, the splitting gesture may include at least one of the following: a closed-loop gesture having at least one point of intersection on the motion trail, and a non-closed-loop gesture, wherein the non-closed-loop gesture includes: a linear trail or a curved trail dividing a display area, on which the splitting gesture is currently operating, into two areas.

In an exemplary embodiment, under a condition that the touch control screen is divided into multiple display areas or multiple layers of display areas according to the splitting gesture, an area ratio of a divided display area corresponding to the display area, on which the splitting gesture is currently operating, to the display area, on which the splitting gesture is currently operating, is determined according to one of the following modes: a pre-configured area ratio; an area ratio of an area encircled by the closed-loop gesture to the display area on which the splitting gesture is currently operating; and an area ratio of one of the two areas divided by the non-closed-loop gesture to the display area on which the splitting gesture is currently operating.

In an exemplary embodiment, the step that at least one application program interface and/or at least one application list interface are/is displayed via the multiple display areas or the multiple layers of display areas may further include that: an application program encircled by the closed-loop gesture is started, and the application program interface and/or at least one application list interface are/is displayed via the multiple display areas or the multiple layers of display areas; and/or one application program in application programs through which the non-closed-loop gesture passes is started, and the application program interface and/or at least one application list interface are/is displayed via the multiple display areas or the multiple layers of display areas.

According to another aspect of the embodiments of the present disclosure, an interface display apparatus is also provided, which may include: a receiving module, arranged to receive a motion trail of a continuous touch on a touch control screen; a division module, arranged to divide the touch control screen into multiple display areas or multiple layers of display areas according to the motion trail; and a display module, arranged to display at least one application program interface and/or at least one application list interface via the multiple display areas or the multiple layers of display areas.

In an exemplary embodiment, the division module may include: a determination unit, arranged to determine, according to the motion trail, a display area division mode corresponding to the motion trail, wherein the division mode includes at least one of the following: quantity of display areas, size of display areas, and a layering or partitioning display mode; and a division unit, arranged to divide the touch control screen into multiple display areas or multiple layers of display areas according to the display area division mode.

In an exemplary embodiment, the apparatus may further include: a configuration receiving module, arranged to receive motion trail configuration information; and a configuration module, arranged to configure a corresponding relation between the motion trail and the display area division mode according to the motion trail configuration information.

In an exemplary embodiment, the motion trail may include: a splitting gesture; or a splitting gesture and a starting gesture following the splitting gesture, wherein the division module is further arranged to: divide the touch control screen into multiple display areas or multiple layers of display areas according to the splitting gesture; and the display module is further arranged to: display at least one application program interface and/or at least one application list interface via the multiple display areas or the multiple layers of display areas under a condition that the starting gesture is detected.

In an exemplary embodiment, the splitting gesture may include at least one of the following: a closed-loop gesture having at least one point of intersection on the motion trail, and a non-closed-loop gesture, wherein the non-closed-loop gesture includes: a linear trail or a curved trail dividing a display area, on which the splitting gesture is currently operating, into two areas.

In an exemplary embodiment, the apparatus may further include a determination module, arranged to determine, under a condition that the touch control screen is divided into multiple display areas or multiple layers of display areas according to the splitting gesture, an area ratio of a divided display area corresponding to the display area, on which the splitting gesture is currently operating, to the display area, on which the splitting gesture is currently operating, according to one of the following modes: a pre-configured area ratio; an area ratio of an area encircled by the closed-loop gesture to the display area on which the splitting gesture is currently operating; and an area ratio of one of the two areas divided by the non-closed-loop gesture to the display area on which the splitting gesture is currently operating.

In an exemplary embodiment, the display module may be further arranged to: start an application program encircled by the closed-loop gesture, and display the application program interface and/or at least one application list interface via the multiple display areas or the multiple layers of display areas; and/or start one application program in application programs through which the non-closed-loop gesture passes, and display the application program interface and/or at least one application list interface via the multiple display areas or the multiple layers of display areas.

By means of the embodiments of the present disclosure, a motion trail of a continuous touch on a touch control screen is received; the touch control screen is divided into multiple display areas or multiple layers of display areas according to the motion trail; and at least one application program interface and/or at least one application list interface are/is displayed via the multiple display areas or the multiple layers of display areas. The problem of complicated operation for split-screen displaying in the related art is solved, thereby improving the user experience.

### Brief Description of the Drawings

The drawings illustrated herein are intended to provide further understanding of the present disclosure, and form a part of the present application. The schematic embodiments and illustrations of the present disclosure are intended to explain the present disclosure, and do not form improper limits to the present disclosure. In the drawings:
Fig. 1 is a flowchart of an interface display method according to an embodiment of the present disclosure;
Fig. 2 is a structural diagram of an interface display apparatus according to an embodiment of the present disclosure;
Fig. 3 is an exemplary structural diagram 1 of an interface display apparatus according to an embodiment of the present disclosure;
Fig. 4 is an exemplary structural diagram 2 of an interface display apparatus according to an embodiment of the present disclosure;
Fig. 5 is an exemplary structural diagram 3 of an interface display apparatus according to an embodiment of the present disclosure;
Fig. 6 is a flowchart of an application screen-splitting method according to an exemplary embodiment of the present disclosure;
Fig. 7 is a schematic diagram of a splitting gesture according to an exemplary embodiment of the present disclosure;
Fig. 8 is a schematic diagram of screen splitting based on a splitting gesture according to an exemplary embodiment of the present disclosure;
Fig. 9 is a schematic diagram of a linear splitting gesture range according to an exemplary embodiment of the present disclosure;
Fig. 10 is a schematic diagram of a splitting gesture and a starting gesture according to an exemplary embodiment of the present disclosure; and
Fig. 11 is a structural diagram of an application screen-splitting apparatus according to an exemplary embodiment of the present disclosure.

### Detailed Description of the Embodiments

It is important to note that the embodiments in the present application and the characteristics in the embodiments may be combined under the condition of no conflicts. The embodiments of the present disclosure will be illustrated below with reference to the drawings and in conjunction with the embodiments in detail.

In order to improve the user experience of a user for a screen splitting operation, a free operation for split-screen displaying is implemented. The embodiments of the present disclosure provide an interface display method and an interface display apparatus for dividing a display area according to a motion trail of a continuous touch. According to the description of the embodiments of the present disclosure, it can be understood that the embodiments of the present disclosure may be applied to a terminal device having a touch control screen (touch display screen). The terminal device may further include, but is not limited to a mobile phone terminal, a terminal device having a touch control screen such as a tablet computer and a router. Moreover, an operating system applied in the embodiments of the present disclosure is not limited to an Android system. An interface display mode of the embodiments of the present disclosure can also be applied to other systems supporting a touch control operation, e.g., a mobile operating system such as a smart operating system of iPhone (iOS system) and an operating system of Windows Mobile Phone.

The steps shown in the flowchart of the drawings may be executed in a computer system including, for example, a set of computer-executable instructions. Moreover, although a logic sequence is shown in the flowchart, the shown or described steps may be executed in a sequence different from the sequence here under certain conditions.

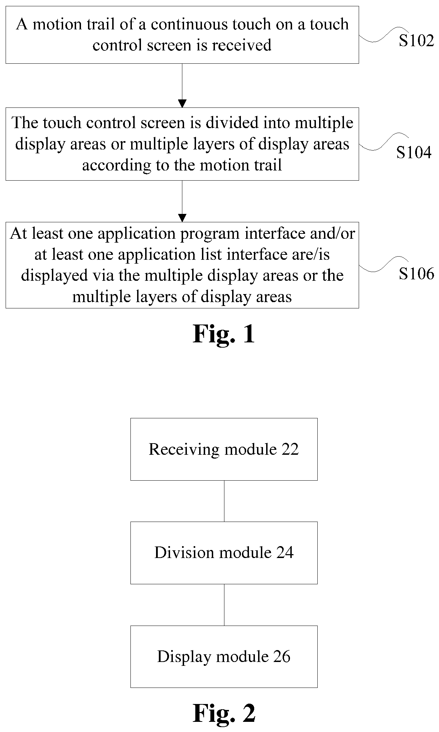

The present embodiment provides an interface display method. Fig. 1 is a flowchart of an interface display method according to an embodiment of the present disclosure. As shown in Fig. 1, the flow includes the following steps.

Step S102: A motion trail of a continuous touch on a touch control screen is received.

Step S104: The touch control screen is divided into multiple display areas or multiple layers of display areas according to the motion trail.

Step S106: At least one application program interface and/or at least one application list interface are/is displayed via the multiple display areas or the multiple layers of display areas.

By means of the above-mentioned steps, the display area is divided according to the motion trail of the continuous touch, thereby implementing split-screen displaying of an interface. Compared with the related art in which a user operation mode is complicated due to the fact that the position and size of the display area cannot be adjusted via a simple user operation, the present embodiment simplifies the split-screen display operation, improves the user experience, and can make more flexible division of multiple/multiple layers of display areas.

In an exemplary embodiment, in Step S104, the step that the touch control screen is divided into multiple display areas or multiple layers of display areas according to the motion trail may include that: a display area division mode corresponding to the motion trail is determined, wherein the division mode includes at least one of the following: quantity of display areas, size of display areas, and a layering or partitioning display mode; and the touch control screen is divided into multiple display areas or multiple layers of display areas according to the display area division mode. For example, under the state that the screen is not split, the display area of the whole touch control screen is integrated as a whole. When a sliding gesture operation is executed on the touch control screen, a motion trail of the continuous touch can be generated. According to specific characteristics of the motion trail, for example, characteristics on whether a closed-loop trail is included, it can be determined whether the screen is split in a partitioning display mode or an overlapped layering mode. The size of multiple divided display areas may be determined according to a display area splitting situation based on the motion trail. In addition, it is important to note that when a sliding gesture operation is executed in one of multiple display areas or multiple layers of display areas which have been formed by screen splitting, the current display area may be further split, thereby implementing a more flexible and freer screen splitting operation.

In an exemplary embodiment, a corresponding relation between the motion trail and the display area division mode may be set by a user. A terminal device may receive motion trail configuration information; and a corresponding relation between the motion trail and the display area division mode may be configured according to the motion trail configuration information.

In an exemplary embodiment, the above-mentioned motion trail includes: a splitting gesture; or a splitting gesture and a starting gesture following the splitting gesture. The splitting gesture is used for dividing the touch control screen into multiple display areas or multiple layers of display areas. The starting gesture is used for representing ending of the splitting gesture and starting of interface displaying in split screen. In addition, the starting gesture may also be used for marking the motion trail as a screen splitting operation gesture so as to distinguish the current operation from a general sliding operation.

In an exemplary embodiment, the splitting gesture includes at least one of the following: a closed-loop gesture having at least one point of intersection on the motion trail, and a non-closed-loop gesture. The non-closed-loop gesture includes: a linear trail or a curved trail dividing a display area, on which the splitting gesture is currently operating, into two areas. The closed-loop gesture and the non-closed-loop gesture may correspond to different split-screen modes. For example, the closed-loop gesture may represent that the split-screen mode is a layering display mode; and the non-closed-loop gesture may represent that the split-screen mode is a partitioning display mode, or to the contrary.

In an exemplary embodiment, under a condition that the touch control screen is divided into multiple display areas or multiple layers of display areas according to the splitting gesture, an area ratio of a divided display area corresponding to the display area, on which the splitting gesture is currently operating, to the display area, on which the splitting gesture is currently operating, is determined according to one of the following modes: a pre-configured area ratio; an area ratio of an area encircled by the closed-loop gesture to the display area on which the splitting gesture is currently operating; and an area ratio of one of the two areas divided by the non-closed-loop gesture to the display area on which the splitting gesture is currently operating. In such a way, the size of the display areas obtained by screen splitting may be flexibly adjusted.

In an exemplary embodiment, in order to further improve the operation experience of the user, the step that at least one application program interface and/or at least one application list interface are/is displayed via the multiple display areas or the multiple layers of display areas may further include that: an application program encircled by the closed-loop gesture is started, and the application program interface and/or at least one application list interface are/is displayed via the multiple display areas or the multiple layers of display areas; and/or one application program in application programs through which the non-closed-loop gesture passes is started, and the application program interface and/or at least one application list interface are/is displayed via the multiple display areas or the multiple layers of display areas. In such a way, a non-started application program may be started and displayed on split screens in a mode of circling an application program icon or shortcut or in a mode of sliding over the application program icon or shortcut via a gesture. Under a condition that there are multiple application programs over which the gesture slides, it may be determined to start and display one of the application programs on split screens through further confirmation.

The present embodiment also provides an interface display apparatus. The apparatus may be used for implementing the above-mentioned interface display method. Fig. 2 is a structural diagram of an interface display apparatus according to an embodiment of the present disclosure. As shown in Fig. 2, the apparatus includes: a receiving module 22, a division module 24 and a display module 26. The receiving module 22 is arranged to receive a motion trail of a continuous touch on a touch control screen. The division module 24 is coupled to the receiving module 22 and is arranged to divide the touch control screen into multiple display areas or multiple layers of display areas according to the motion trail. The display module 26 is coupled to the division module 24 and is arranged to display at least one application program interface and/or at least one application list interface via the multiple display areas or the multiple layers of display areas.

It is important to note that the modules and units involved in the embodiments of the present disclosure may be implemented in a software mode or implemented in a hardware mode. The modules and units described in the present embodiment may be also disposed in a processor. For example, it may be described as: a processor includes a receiving module 22, a division module 24 and a display module 26, wherein the names of these modules do not form limits to the module itself under a certain condition. For example, the receiving module 22 may also be described as "a module arranged to receive a motion trail of a continuous touch on a touch control screen".

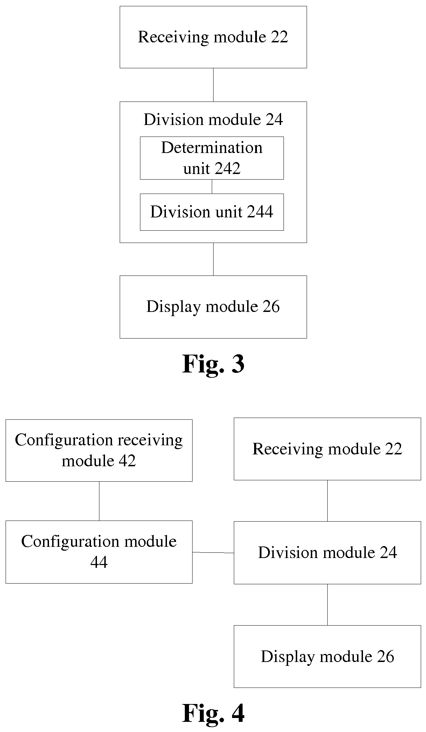

Fig. 3 is an exemplary structural diagram 1 of an interface display apparatus according to an embodiment of the present disclosure. In an exemplary embodiment, the division module 24 may include: a determination unit 242, arranged to determine, according to the motion trail, a display area division mode corresponding to the motion trail, wherein the division mode includes at least one of the following: quantity of display areas, size of display areas, and a layering or partitioning display mode; and a division unit 244, coupled to the determination unit 242, and arranged to divide the touch control screen into multiple display areas or multiple layers of display areas according to the display area division mode.

Fig. 4 is an exemplary structural diagram 2 of an interface display apparatus according to an embodiment of the present disclosure. In an exemplary embodiment, the apparatus further includes: a configuration receiving module 42, arranged to receive motion trail configuration information; and a configuration module 44, coupled to the configuration receiving module 42 and the division module 24, and arranged to configure a corresponding relation between the motion trail and the display area division mode according to the motion trail configuration information.

In an exemplary embodiment, the motion trail includes: a splitting gesture; or a splitting gesture and a starting gesture following the splitting gesture. The division module 24 is further arranged to: divide the touch control screen into multiple display areas or multiple layers of display areas according to the splitting gesture. The display module 26 is further arranged to: display at least one application program interface and/or at least one application list interface via the multiple display areas or the multiple layers of display areas under a condition that the starting gesture is detected.

In an exemplary embodiment, the splitting gesture includes at least one of the following: a closed-loop gesture having at least one point of intersection on the motion trail, and a non-closed-loop gesture. The non-closed-loop gesture may include: a linear trail or a curved trail dividing a display area, on which the splitting gesture is currently operating, into two areas.

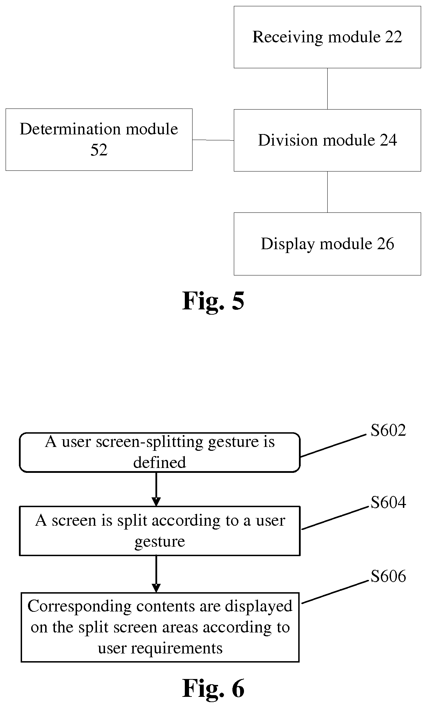

Fig. 5 is an exemplary structural diagram 3 of an interface display apparatus according to an embodiment of the present disclosure. In an exemplary embodiment, the apparatus further includes: a determination module 52, coupled to the division module 24, and arranged to determine, under a condition that the touch control screen is divided into multiple display areas or multiple layers of display areas according to the splitting gesture, an area ratio of a divided display area corresponding to the display area, on which the splitting gesture is currently operating, to the display area, on which the splitting gesture is currently operating, according to one of the following modes: a pre-configured area ratio; an area ratio of an area encircled by the closed-loop gesture to the display area on which the splitting gesture is currently operating; and an area ratio of one of the two areas divided by the non-closed-loop gesture to the display area on which the splitting gesture is currently operating.

In an exemplary embodiment, the display module 26 is further arranged to: start an application program encircled by the closed-loop gesture, and display the application program interface and/or at least one application list interface via the multiple display areas or the multiple layers of display areas; and/or start one application program in application programs through which the non-closed-loop gesture passes, and display the application program interface and/or at least one application list interface via the multiple display areas or the multiple layers of display areas.

In order to make the technical solution and implementation method of the embodiments of the present disclosure clearer, an implementation process will be described in detail below with an exemplary embodiment.

The present exemplary embodiment provides an application screen-splitting method and apparatus. By means of the solution described in the present exemplary embodiment, a screen splitting mode of a user may be executed in a mode which conforms to a user operation most directly and occurs to the user most easily, thereby making the operation simpler.

In order to solve the problem of inconvenient splitting and displaying of multiple applications in the existing multi-task operating system on the same screen, the present exemplary embodiment provides an application screen-splitting method. In the application screen-splitting method, a user screen-splitting gesture is defined; a screen is split according to a user gesture; and corresponding contents are displayed on the split screen areas according to user requirements.

Meanwhile, the present exemplary embodiment provides an application screen-splitting apparatus, which includes: a setting module, arranged to set user screen-splitting gestures; a detection module, arranged to detect the user screen-splitting gesture on a screen; a display module, arranged to display a trail of the user screen-splitting gesture; a control module, arranged to control contents to be respectively displayed to be output on different screen splitting areas; and a storage module, arranged to store the screen-splitting gesture defined by a user.

The present exemplary embodiment will be described in detail below with the drawings.

Fig. 6 is a flowchart of an application screen-splitting method according to an exemplary embodiment of the present disclosure. As shown in Fig. 6, the application screen-splitting method includes the following steps.

Step S602: A user screen-splitting gesture is defined.

In the exemplary embodiment, the screen-splitting gesture includes two parts, the first part being a splitting gesture which represents that a current gesture is used for splitting a screen.

Further, a starting/stopping position of the splitting gesture may be a screen edge of a mobile phone, or may be a display edge of a certain application. A trail generated by the splitting gesture may be a straight line or an irregular curve.

Further, the above-mentioned edge should be a range. For example, for a screen having a resolution 720*1280, the screen edge should be a rectangular frame range of, e.g., 0-50*0-50. That is, a user gesture starts from a rectangular frame at one side of the screen and stops in a rectangular frame at the other side of the screen. For example, if a current coordinate of an application on the screen is: (0, 0), (720-1280, 0), (0, 640), (720, 640), then an application edge in this case may be a range of a rectangular frame formed by shrinkage of the coordinate of the application on the screen by 50 units. That is, a user gesture starts from a rectangular frame of an application at one side of the screen and stops in a rectangular frame of the application at the other side of the screen. A gesture starting from or stopping at such an edge range is one of the splitting gestures defined herein.

Specially, the above-mentioned irregular curve may also be provided with another splitting gesture, that is, a closed-loop curved splitting gesture (closed-loop gesture). In this case, it shall not be limited to the above-mentioned edge definition. The closed-loop curved splitting gesture may also be used for splitting a screen. The split-screen definition of the closed-loop curved splitting gesture may be defined by a user, as the split of a screen, or as the split of layer of the screen.

If the split-screen definition of the closed-loop curved splitting gesture is defined as the split of layer of the screen, an upper layer of screen may shield displaying of a lower layer of screen. Certainly, some or all of the contents of the lower layer may be displayed on the upper layer by defining the transparency of the upper layer of screen.

Further, the closed-loop curved splitting gesture is not limited to a gesture of which the stopping position is the starting position of the gesture. As long as a closed loop appears in a trail drawing process of the closed-loop curved splitting gesture, it can be regarded that a current gesture is a closed-loop curved splitting gesture. For example, if a closed-loop curved splitting gesture is applied to an application icon, then the application runs on the upper layer of screen to achieve floating screen-splitting. If a closed-loop curved splitting gesture is applied to any position of an application occupying the whole screen currently, then the application runs on the upper layer of screen to achieve floating screen-splitting.

The second part is a starting gesture, for defining displaying of a split-screen menu (application program list) or displaying of a split-screen application on an area directed during ending of the gesture.

Further, the starting gesture may be used together with the splitting gesture, or the starting gesture may not be used, which can be defined by the user. When the starting gesture and the splitting gesture are used together, the starting gesture is started when the splitting gesture is ended. The gesture should end at the screen edge or the application screen edge, displaying of a split-screen application or displaying of a split-screen menu will be performed in a screen splitting area where the stopping position of the gesture is located, and this can be customized by the user.

Specially, when the closed-loop curved splitting gesture and the starting gesture are used together, as long as the trail of the closed-loop curved splitting gesture achieves a closed loop, the trail of the gesture starting from the moment of completing the closed loop becomes the trail of the starting gesture. Displaying of a split-screen application or displaying of a split-screen menu will be performed in a screen layer where the stopping position of the trail of the starting gesture is located, and this may be customized by the user.

Specially, when the starting gesture is not used based on a user selection, the system automatically displays one or more split-screen menus on some areas of the split screen and displays one or more split-screen applications on the other areas.

Further, the above-mentioned split-screen menu refers to a list of all applications capable of being displayed on split screens.

Further, the splitting gesture may imitate a normal splitting mode, that is, a mode of splitting the screen of the mobile phone from left to right, from right to left, from up to down, from down to up or along diagonal lines.

In addition, the linear splitting gesture (non-closed-loop gesture) is not required to be completely horizontal or vertical. As long as it is a linear splitting trail within a certain slope range, a gesture can be regarded as the linear splitting gesture.

Further, in order to avoid probable operation collision between the conventional sliding gesture and the existing splitting gesture, when sliding splitting is ended, opposite short sliding at a different angle may be performed. Splitting ending is represented by using this mode, that is, by using the starting gesture.

Step S604: A screen is split according to a user gesture.

Firstly, an edge of the screen and an edge of application displaying should be confirmed. Generally, the edge may be defined as a periphery of the screen or a range of 50 pixels at a periphery of an application. The range is used for defining whether the splitting gesture is effective. Specially, this range is not used in the detection of the closed-loop splitting gesture.

When the user executes a gesture operation on the screen, if the starting point and stopping point of a gesture fall on the edge of the screen or the edge of application displaying respectively, the gesture may be defined as a linear splitting gesture or a curved splitting gesture. When a gesture forms a closed loop, the gesture may be defined as a closed-loop splitting gesture. After the linear splitting gesture or the curved splitting gesture is detected, if the gesture shows up an opposite trail, the gesture may be defined as a starting gesture. Specially, when a part of the trail continues after the closed loop is formed, the closed-loop splitting gesture may be defined as the starting gesture.

As long as the system detects and records the gesture trail of the user in real time and performs judgement, gesture determination can be completed.

The user splits the screen by using a splitting gesture. A screen splitting proportion or a screen layering proportion can be determined based on a certain calculation method according to the trail of the splitting gesture of the user (the splitting gesture may be or may not be displayed). Further, when the user uses the splitting gesture, the system records a starting position and a splitting trail of the splitting gesture, and judges whether the gesture is a closed-loop splitting gesture according to whether the splitting trail forms a closed loop.

Further, according to the above-mentioned calculation method, it is needed to perform linear connection or connection prolonging on starting and stopping pixel point positions of the linear splitting gesture and the curved splitting gesture, an encircled graph becomes a rectangle or a trapezoid in combination with the edge of the screen or the edge of the application, the pixel area is calculated according to an area summation formula of the rectangle or the trapezoid. Subsequently, a ratio of the pixel area to the total screen pixel area or the pixel area to the total application screen pixel area is calculated. Finally, displaying of an integral splitting result about final screen splitting is determined according to the ratio and a relative position for screen splitting.

Further, as for the closed-loop curved splitting gesture, in view of inconvenience in calculation of the area of a graph encircled by a closed-loop curve, an area proportion of layering displaying of the screen encircled by the closed-loop curve may be directly defined as, for example, 40%. Meanwhile, the user is allowed to enlarge and shrink the layered screen.

Specially, a method for quickly starting to split a screen by using a splitting gesture between applications may include the following modes: circling a certain application by using a closed-loop splitting curve to start layering displaying of the application; or using a linear splitting gesture or a curved splitting gesture, further confirming which application on the splitting trail is selected and performing split-screen displaying for the selected application.

Step S606: Corresponding contents are displayed on the split screen areas according to user requirements.

The step that corresponding contents are displayed according to user requirements refers to that a part of the split screen areas displays an application displayed before splitting, and another part of the split screen areas displays an application main menu to allow the user to select and start other applications needing to be displayed on split screens.

From the above-mentioned description, it may be seen that a new split-screen mode provided by the present exemplary embodiment is that: a visual gesture mode is adopted, and the user only needs to execute a screen splitting operation gesture at specified positions of the screen for one time, so the current application can be directly and automatically displayed as an upper part or a lower part on the split screens, and a main menu application list automatically appears on the other part of the screen to allow the user to select the application to be started.

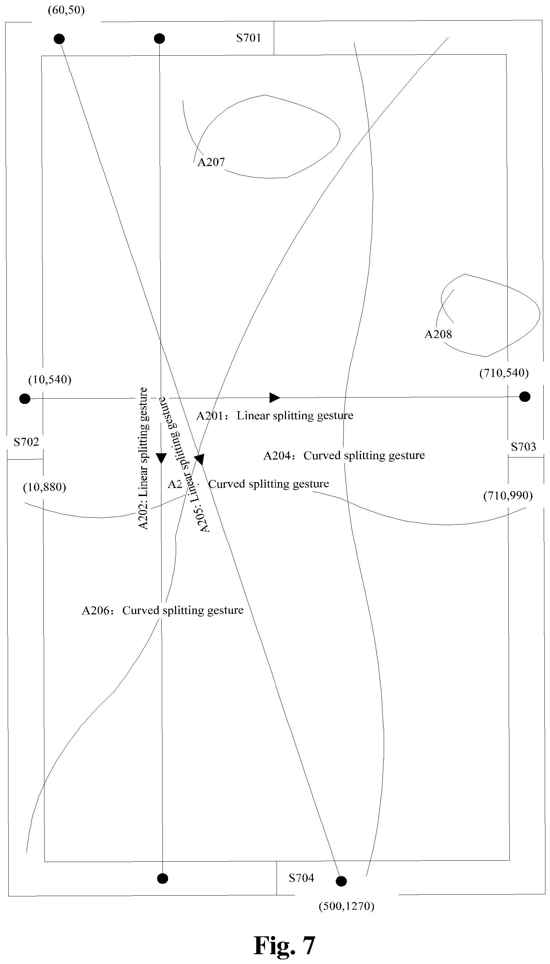

Fig. 7 is a schematic diagram of a splitting gesture according to an exemplary embodiment of the present disclosure. As shown in Fig. 7, S701 to S704 are used for describing a starting/stopping range of a splitting gesture, 50 pixels being a unit herein. Blue partitions formed in S701 to S704 are a screen edge. As long as the starting position of the splitting gesture falls into this area, it represents that the gesture is the splitting gesture. These gestures such as A201 to A206 may be operated from left to right, from right to left, from up to down, from down to up or along diagonal lines for splitting.

In a screen splitting process, the trail of the splitting gesture may be displayed on the screen, or the trail of the splitting gesture may be not displayed.

The screen division of split areas may be arranged according to the percentage of splitting of the screen in accordance with a gesture trail. For example, the pixel coordinates of starting and stopping points of a gesture A201 are (10, 540), (710, 540), and requirements of a splitting gesture are met. According to the definition, the splitting gesture may split the screen into an upper part and a lower part. According to the two coordinate values, the coordinates of starting and stopping points may be simplified into (0, 540), (720, 540). That is, the splitting gesture starts from a very edge of the screen. A standard rectangular area may be formed together with a left upper corner (0, 0) and right upper corner (720, 0) of the screen. The area of the rectangular area is calculated and the percentage of splitting of the screen can be obtained as: (720-0)*(540-0)/(720*1280)=42.2%≈40%. Therefore, the screen is split into a rectangular area by means of the gesture A201, an upper part occupying 40% of the area, and a lower part occupying 60% of the area. A screen-splitting result is that 40% of the screen forms an upper application display range and 60% of the screen forms a lower application display range.

The pixel coordinates of starting and stopping points of a gesture A203 are (10, 880), (710, 900), and requirements of a splitting gesture are met. According to the definition, the splitting gesture may split the screen into an upper part and a lower part. According to the two coordinate values, the coordinates of starting and stopping points may be simplified into (0, 880), (720, 900). That is, the splitting gesture starts from a very edge of the screen. A standard trapezoidal area may be formed together with a left upper corner (0, 0) and right upper corner (720, 0) of the screen. The area of the trapezoidal area is calculated and the percentage of splitting of the screen can be obtained as: ((900+880)/2)*720/(720*1280)=69.5%≈70%. Therefore, the screen is split into a rectangular area by means of the gesture A203, an upper part occupying 70% of the area, and a lower part occupying 30% of the area. A screen-splitting result is that 70% of the screen forms an upper application display range and 30% of the screen forms a lower application display range.

The pixel coordinates of starting and stopping points of a gesture A205 are (10, 50), (500, 1270), and requirements of a splitting gesture are met. According to the definition, the splitting gesture may split the screen into a left part and a right part. According to the two coordinate values, the coordinates of starting and stopping points may be simplified into (0, 50), (500, 1280). That is, the splitting gesture starts from a very edge of the screen. A standard trapezoidal area may be formed together with a left upper corner (0, 0) and left lower corner (0, 1280) of the screen. The area of the trapezoidal area is calculated and the percentage of splitting of the screen can be obtained as: ((50+500)/2)*720/(720*1280)=23.4%≈20%. Therefore, the screen is split into a rectangular area by means of the gesture A205, a left part occupying 20% of the area, and a right part occupying 80% of the area. A screen-splitting result is that 20% of the screen forms a left application display range and 80% of the screen forms a right application display range.

Since gesture A207 is a closed-loop curve, it is difficult to calculate the area of an encircled range generally. It may be needed to further estimate the area of the encircled range to reduce the screen splitting calculation amount and increase the screen splitting speed. Therefore, an area ratio of upper layer displaying may be directly defined as 40% of the whole screen, which serves as a display range. The user may also freely zoom up and down the displaying of the upper layer in the upper layer of the split screen.

Likewise, Fig. 7 may be regarded as an application display range. So, S701 to S704 are used for describing a starting/stopping range of a splitting gesture on an application, 50 pixels being a unit herein.

Blue partitions formed in S701 to S704 are a screen edge. As long as the starting position of the splitting gesture falls into this area, it represents that the gesture is the splitting gesture. These gestures may be operated from left to right, from right to left, from up to down, from down to up or along diagonal lines for splitting, such as A201 to A206.

In a screen splitting process of applications, the trail of the splitting gesture may be displayed on the application screen, or the trail of the splitting gesture may be not displayed.

Specially, A207 and A208 are closed-loop splitting gestures, which are not limited by the screen edge or the application screen edge.

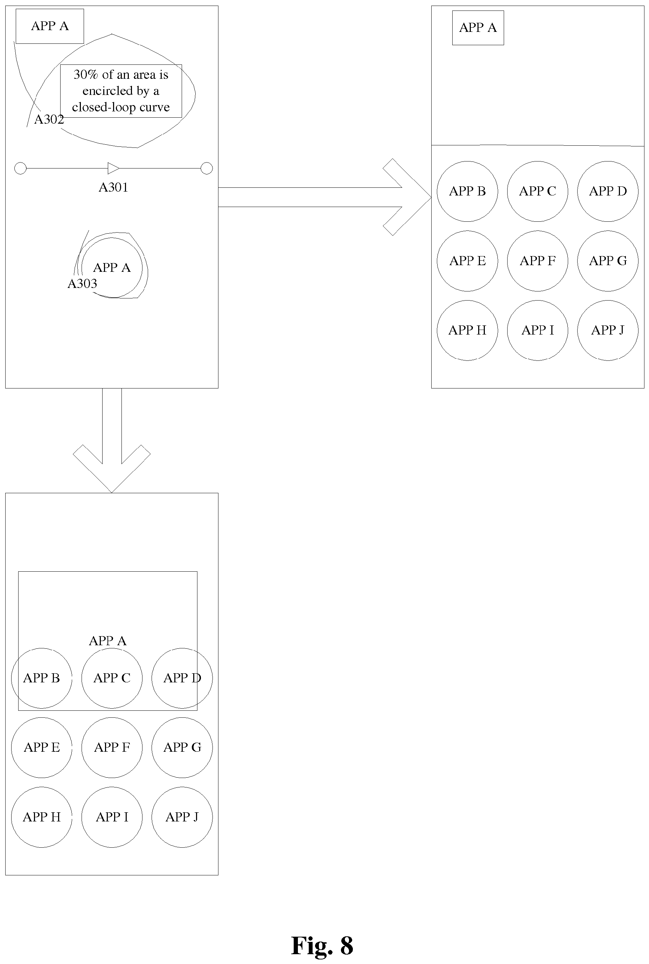

Fig. 8 is a schematic diagram of screen splitting based on a splitting gesture according to an exemplary embodiment of the present disclosure. As shown in Fig. 8, after the operation of the gesture A301 is completed, the screen is automatically layered into two parts. For example, the upper part occupies 30% of the original screen, the lower part occupies 70% of the original screen, the upper part displays an APP A, and the lower part displays an application split-screen menu according to the setting.

Specially, the ratio of the area encircled by a gesture A302 to the area of the screen determines the application display area of the upper screen after the screen is split. For example, the area encircled by A302 is 30% of the whole screen. So, the display area of the application APP A of the upper screen is 30% of the original screen. The lower layer displays an application split-screen menu according to the setting to allow the user to select other split-screen applications to be run on the remaining 70% of the screen.

Specially, if a gesture A302 is defined as a screen layering gesture, after the operation of the gesture A302 is completed, the screen is automatically layered into two parts. The upper layer displays an APP A. The rectangular area shields 30% of the original screen. The lower layer displays other applications or a split-screen menu to allow the user to select other split-screen applications to be run on the lower layer.

Specially, if a gesture A303 is defined as a screen layering gesture, after the operation of the gesture A303 is completed, the screen is automatically layered into two parts. The upper layer displays an application encircled by the gesture A303, and a display range of the application shall be a proportion based on system default, such as, a rectangular area occupying 30% of an original screen.

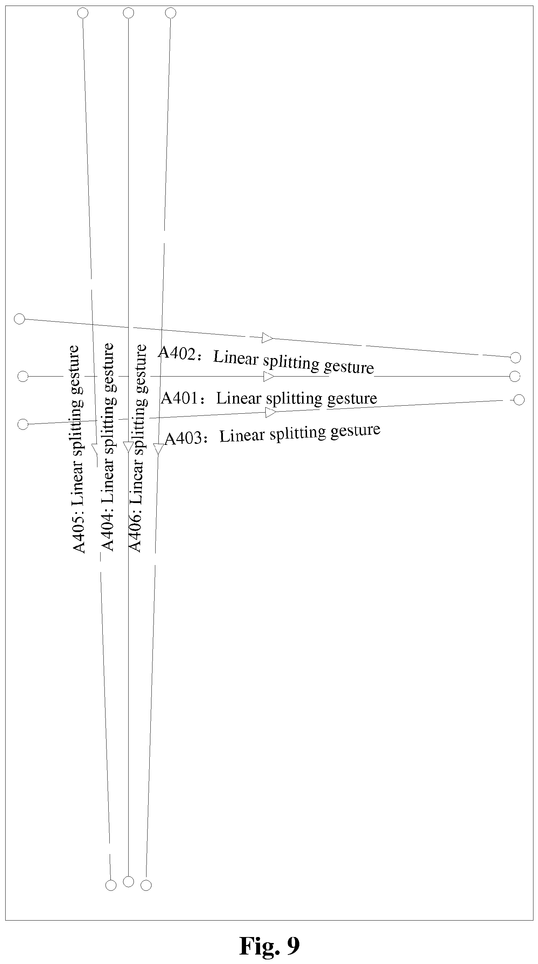

Fig. 9 is a schematic diagram of a linear splitting gesture range according to an exemplary embodiment of the present disclosure. As shown in Fig. 9, gestures A401 to A406 are all regarded as reasonable linear splitting gestures, as long as the linear trail slope of the gesture falls within a certain range. For example, a horizontal linear slope range is -0.15 to 0.15, and a vertical linear slope range is 6.67 ∼ +∞, -6.67 ∼ -∞.

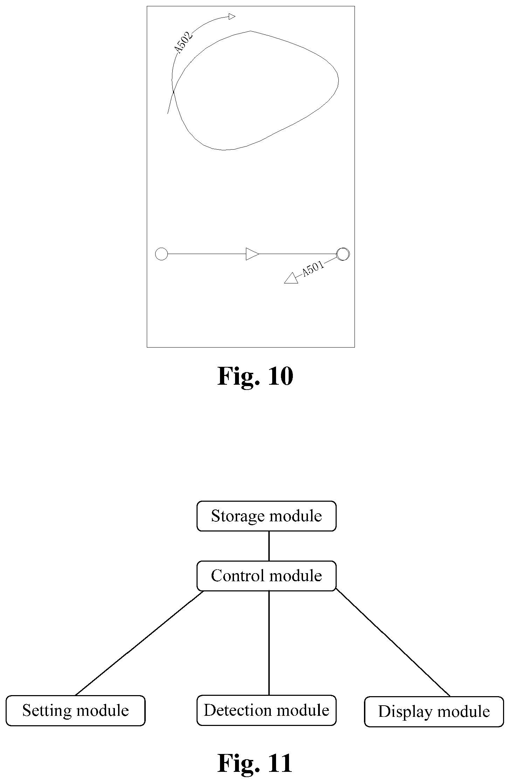

Fig. 10 is a schematic diagram of a splitting gesture and a starting gesture according to an exemplary embodiment of the present disclosure. As shown in Fig. 10, A501 is a starting gesture used together with a linear splitting gesture. Since the direction of an arrow is downward, a lower part of the split screen is the screen for displaying an appointed application or split-screen menu.

A502 is a starting gesture used together with a curved splitting gesture. Since an arrow points to the exterior of the closed-loop curve, the top layer of the split screens or the bottom layer of the split screens is displayed as a split-screen menu.

Fig. 11 is a structural diagram of an application screen-splitting apparatus according to an exemplary embodiment of the present disclosure. As shown in Fig. 11, the apparatus may include the following basic modules: a setting module, arranged to set user screen-splitting gestures; a detection module, arranged to detect the user screen-splitting gesture on a screen; a display module, arranged to display a trail of the user screen-splitting gesture; a control module, arranged to control contents to be respectively displayed to be output on different screen splitting areas; and a storage module, arranged to store the screen-splitting gesture defined by a user.

A module composition graph according to the apparatus may be widely applied to various terminal devices such as a mobile phone and a desk phone, and may be widely applied to a network-side device such as a switch.

In conclusion, the above-mentioned solution disclosed in the embodiments of the present disclosure has the following advantages. (1) A screen can be arbitrarily split without the need of a rapid starting icon for screen splitting. (2) An application is arbitrarily displayed on a split screen, and the size of the split screen may be arbitrarily specified. (3) The screen may be arbitrarily split into areas of any possible sizes. (4) The screen may be split irregularly. The problem of inconvenient splitting and displaying of multiple applications in the existing multi-task operating system on the same screen can be solved by simplicity and easy transformation in software upgrade of a user terminal.

Industrial applicability: from the above-mentioned description, it can be seen that the technical solution provided by the embodiments of the present disclosure simplifies a split-screen displaying operation, improves the user experience, and can make more flexible division of multiple/multiple layers of display areas.

Obviously, those skilled in the art shall understand that all of the above-mentioned modules or steps in the embodiments of the present disclosure may be implemented by using a general calculation apparatus, may be centralized on a single calculation apparatus or may be distributed on a network composed of a plurality of calculation apparatuses. In an exemplary embodiment, they may be implemented by using executable program codes of the calculation apparatuses. Thus, they may be stored in a storage apparatus and executed by the calculation apparatuses, or they are manufactured into each integrated circuit module respectively, or multiple modules or steps therein are manufactured into a single integrated circuit module. Thus, the present disclosure is not limited to a combination of any specific hardware and software.

The above is only the exemplary embodiments of the present disclosure, and not intended to limit the present disclosure. There may be various modifications and variations in the present disclosure for those skilled in the art. Any modifications, equivalent replacements, improvements and the like made within the principle of the present disclosure shall fall within the scope of protection defined by the appended claims of the present disclosure.

## Claims

1. An interface display method, comprising:
receiving a motion trail of a continuous touch on a touch control screen;
dividing the touch control screen into multiple display areas or multiple layers of display areas according to the motion trail; and
displaying at least one application program interface and/or at least one application list interface via the multiple display areas or the multiple layers of display areas.

2. The method as claimed in claim 1, wherein dividing the touch control screen into multiple display areas or multiple layers of display areas according to the motion trail comprises:
determining, according to the motion trail, a display area division mode corresponding to the motion trail, wherein the division mode comprises at least one of the following: quantity of display areas, size of display areas, and a layering or partitioning display mode; and
dividing the touch control screen into multiple display areas or multiple layers of display areas according to the display area division mode.

3. The method as claimed in claim 2, further comprising:
receiving motion trail configuration information; and
configuring a corresponding relation between the motion trail and the display area division mode according to the motion trail configuration information.

4. The method as claimed in any one of claims 1 to 3, wherein the motion trail comprises: a splitting gesture; or a splitting gesture and a starting gesture following the splitting gesture, wherein
dividing the touch control screen into multiple display areas or multiple layers of display areas according to the motion trail comprises: dividing the touch control screen into multiple display areas or multiple layers of display areas according to the splitting gesture; and
displaying at least one application program interface and/or at least one application list interface via the multiple display areas or the multiple layers of display areas comprises: displaying at least one application program interface and/or at least one application list interface via the multiple display areas or the multiple layers of display areas under a condition that the starting gesture is detected.

5. The method as claimed in claim 4, wherein the splitting gesture comprises at least one of the following: a closed-loop gesture having at least one point of intersection on the motion trail, and a non-closed-loop gesture, wherein
the non-closed-loop gesture comprises: a linear trail or a curved trail dividing a display area, on which the splitting gesture is currently operating, into two areas.

6. The method as claimed in claim 5, wherein under a condition that the touch control screen is divided into multiple display areas or multiple layers of display areas according to the splitting gesture, an area ratio of a divided display area corresponding to the display area, on which the splitting gesture is currently operating, to the display area, on which the splitting gesture is currently operating, is determined according to one of the following modes:
a pre-configured area ratio;
an area ratio of an area encircled by the closed-loop gesture to the display area on which the splitting gesture is currently operating; and
an area ratio of one of the two areas divided by the non-closed-loop gesture to the display area on which the splitting gesture is currently operating.

7. The method as claimed in claim 5, wherein displaying at least one application program interface and/or at least one application list interface via the multiple display areas or the multiple layers of display areas further comprises:
starting an application program encircled by the closed-loop gesture, and displaying the application program interface and/or at least one application list interface via the multiple display areas or the multiple layers of display areas; and/or
starting one application program in application programs through which the non-closed-loop gesture passes, and displaying the application program interface and/or at least one application list interface via the multiple display areas or the multiple layers of display areas.

8. An interface display apparatus, comprising:
a receiving module, arranged to receive a motion trail of a continuous touch on a touch control screen;
a division module, arranged to divide the touch control screen into multiple display areas or multiple layers of display areas according to the motion trail; and
a display module, arranged to display at least one application program interface and/or at least one application list interface via the multiple display areas or the multiple layers of display areas.

9. The apparatus as claimed in claim 8, wherein the division module comprises:
a determination unit, arranged to determine, according to the motion trail, a display area division mode corresponding to the motion trail, wherein the division mode comprises at least one of the following: quantity of display areas, size of display areas, and a layering or partitioning display mode; and
a division unit, arranged to divide the touch control screen into multiple display areas or multiple layers of display areas according to the display area division mode.

10. The apparatus as claimed in claim 9, further comprising:
a configuration receiving module, arranged to receive motion trail configuration information; and
a configuration module, arranged to configure a corresponding relation between the motion trail and the display area division mode according to the motion trail configuration information.

11. The apparatus as claimed in any one of claims 8 to 10, wherein the motion trail comprises: a splitting gesture; or a splitting gesture and a starting gesture following the splitting gesture, wherein
the division module is further arranged to: divide the touch control screen into multiple display areas or multiple layers of display areas according to the splitting gesture; and
the display module is further arranged to: display at least one application program interface and/or at least one application list interface via the multiple display areas or the multiple layers of display areas under a condition that the starting gesture is detected.

12. The apparatus as claimed in claim 11, wherein the splitting gesture comprises at least one of the following: a closed-loop gesture having at least one point of intersection on the motion trail, and a non-closed-loop gesture, wherein
the non-closed-loop gesture comprises: a linear trail or a curved trail dividing a display area, on which the splitting gesture is currently operating, into two areas.

13. The apparatus as claimed in claim 12, further comprising a determination module, arranged to determine, under a condition that the touch control screen is divided into multiple display areas or multiple layers of display areas according to the splitting gesture, an area ratio of a divided display area corresponding to the display area, on which the splitting gesture is currently operating, to the display area, on which the splitting gesture is currently operating, according to one of the following modes:
a pre-configured area ratio;
an area ratio of an area encircled by the closed-loop gesture to the display area on which the splitting gesture is currently operating; and
an area ratio of one of the two areas divided by the non-closed-loop gesture to the display area on which the splitting gesture is currently operating.

14. The apparatus as claimed in claim 12, wherein the display module is further arranged to:
start an application program encircled by the closed-loop gesture, and display the application program interface and/or at least one application list interface via the multiple display areas or the multiple layers of display areas; and/or
start one application program in application programs through which the non-closed-loop gesture passes, and display the application program interface and/or at least one application list interface via the multiple display areas or the multiple layers of display areas.
